(19) Europäisches Patentamt
European Patent Office
Office européen des brevets

(11) **EP 4 016 835 B1**

(12) **EUROPÄISCHE PATENTSCHRIFT**

(45) Veröffentlichungstag und Bekanntmachung des Hinweises auf die Patenterteilung:
**19.02.2025 Patentblatt 2025/08**

(21) Anmeldenummer: **22000009.5**

(22) Anmeldetag: **14.11.2017**

(51) Internationale Patentklassifikation (IPC):
*H02P 21/18* (2016.01)      *H02P 6/18* (2016.01)
*H02P 21/14* (2016.01)      *H02P 21/26* (2016.01)

(52) Gemeinsame Patentklassifikation (CPC):
**H02P 21/141; H02P 6/18; H02P 21/18; H02P 21/26;**
H02P 2207/05

(54) **VERFAHREN ZUR BESTIMMUNG DER WINKELLAGE DES ROTORS EINES VON EINEM WECHSELRICHTER GESPEISTEN SYNCHRONMOTORS UND EINE VORRICHTUNG ZUR DURCHFÜHRUNG DES VERFAHRENS**

METHOD FOR DETERMINING THE ANGULAR POSITION OF THE ROTOR OF A SYNCHRONOUS MOTOR FED BY AN INVERTER AND DEVICE FOR CARRYING OUT THE METHOD

PROCÉDÉ DE DÉTERMINATION DE LA POSITION ANGULAIRE DU ROTOR D'UN MOTEUR SYNCHRONE ALIMENTÉ PAR UN INVERSEUR ET DISPOSITIF DE MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2016 DE 102016014829**

(43) Veröffentlichungstag der Anmeldung:
**22.06.2022 Patentblatt 2022/25**

(62) Dokumentnummer(n) der früheren Anmeldung(en) nach Art. 76 EPÜ:
**17797862.4 / 3 556 011**

(73) Patentinhaber: **SEW-EURODRIVE GmbH & Co. KG 76646 Bruchsal (DE)**

(72) Erfinder:
• **Schuster, Thomas**
D-73113 Ottenbach (DE)
• **Hecker, Christian**
D-76694 Forst (DE)

(56) Entgegenhaltungen:
US-A- 6 137 257      US-A1- 2003 015 987
US-A1- 2004 145 334      US-A1- 2008 129 243

• **TURSINI M ET AL: "Sensorless control of an IPM synchronous motor for cityscooter applications", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, vol. 3, 12 October 2003 (2003-10-12), pages 1472 - 1479, XP010676190, ISBN: 978-0-7803-7883-4, DOI: 10.1109/IAS.2003.1257751**
• **LANDSMANN P ET AL: "Fundamental saliency based encoderless control for reluctance synchronous machines", ELECTRICAL MACHINES (ICEM), 2010 XIX INTERNATIONAL CONFERENCE ON, IEEE, PISCATAWAY, NJ, USA, 6 September 2010 (2010-09-06), pages 1 - 7, XP031779403, ISBN: 978-1-4244-4174-7**

**Beschreibung**

Die Erfindung betrifft ein Verfahren zur Bestimmung der Winkellage des Rotors eines Synchronmotors und eine Vorrichtung zur Durchführung des Verfahrens.

Es ist allgemein bekannt, dass ein Elektromotor von einem Wechselrichter speisbar ist.

Aus der US 6 137 257 A ist als nächstliegender Stand der Technik ein Verfahren zum Monitoren der Winkelposition eines geschalteten Reluktanzmotors (switched reluctance motor, SLR).

Aus der US 2004/145334 A1 ist ein Verfahren zum Regeln einer Synchronmaschine bekannt.

Aus der US 2008/129243 A1 ist ein Motorregelverfahren bekannt, welches den Motor steuert, indem es Parameter des zugehörigen magnetischen Flusses verwendet.

Aus der US 2003/015987 A1 ist ein Verfahren zur Drehzahlregelung bei einem SLR Motor.

Aus TURSINI M ET AL: "Sensorless control of an IPM synchronous motor for cityscooter applications",CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 3, 12. Oktober 2003 (2003-10-12), Seiten 1472-1479 ist eine sensorlose Regelung eine Synchronmotors bekannt.

Aus LANDSMANN P ET AL: "Fundamental saliency based encoderless control for reluctance synchronous machines",ELECTRICAL MACHINES (ICEM), 2010 XIX INTERNATIONAL CONFERENCE ON, IEEE, PISCATAWAY, NJ, USA, 6. September 2010 (2010-09-06), Seiten 1-7 ist ebenfalls eine sensorlose Regelung eine Synchronmotors bekannt.

Der Erfindung liegt daher die Aufgabe zugrunde, ein Verfahren zur verbesserten Bestimmung der Winkellage bei einem Synchronmotor auszubilden.

Erfindungsgemäß wird die Aufgabe bei dem Verfahren zur Bestimmung der Winkellage des Rotors eines Synchronmotors nach den in Anspruch 1 und bei der Vorrichtung zur Durchführung des Verfahrens nach den in Anspruch 7 angegebenen Merkmalen gelöst.

Die Merkmale einer weiteren Ausführungsform des Verfahrens sind, dass es zur Bestimmung der Winkellage des Rotors eines von einem Wechselrichter gespeisten Synchronmotors vorgesehen ist,

> wobei der Wechselrichter von einer Signalelektronik mit Reglereinheit, insbesondere aufweisend Rechnereinheit und Speicher, angesteuert wird,
> wobei der Statorstrom insbesondere mittels zumindest eines Stromerfassungsmittels erfasst wird,
> wobei der Synchronmotor eine Statorwicklung aufweist, welche von einer vom Wechselrichter derart gestellten Drehspannung, also Statorspannung, gespeist wird, dass der erfasste Statorstrom auf einen vorgegebenen Soll-Statorstrom von der Reglereinheit hingeregelt wird,
> wobei ein Soll-Statorstrom mit einem ersten auf die Statorwicklung bezogenen Stellwinkel vorgegeben wird, insbesondere in d-Richtung,
> wobei aus dem zeitlichen Verlauf der Statorspannung und der erfassten Werte des Statorstroms der Statorfluss bestimmt wird.

Von Vorteil ist bei der Erfindung, dass die Signalelektronik derartige Ansteuersignale für den Wechselrichter liefert, dass dieser dem Motor, also der Statorwicklung des Motors, eine derartige Drehspannung bereitstellt, dass der erfasste Motorstrom auf einen jeweils vorgegebenen Soll-Statorstrom hin geregelt wird. Dabei wird aus dem erfassten Statorstromverlauf und Motorspannungsverlauf ein Statorfluss bestimmt, der dann mit der Flusswerteabhängigkeit verglichen wird. Dadurch ist die Winkellage bestimmbar, wobei zur eindeutigen Bestimmung ein weiterer, vorzugsweise senkrecht zum erstgenannten Statorstrom ausgerichteter, Soll-Statorstrom vorgegeben wird und wiederum der Statorfluss bestimmt wird, der dann mit der Flusswerteabhängigkeit verglichen wird. Durch die Auswertung der beiden bestimmten Winkellagen ist eine eindeutige Bestimmung der Winkellage ausführbar.

Somit ist in einfacher Weise die Winkellage ohne weitere Sensoren bestimmbar. Das Stromerfassungsmittel ist zum geregelten Betrieb des Synchronmotors verwendbar.

Die Flusswerteabhängigkeit ist bei Herstellung oder Inbetriebnahme zu jedem Statorstrom durch Messung erfassbar und wird aus Stützpunkten bestimmt, welche sich jeweils als jeweiliger Wert einer Flusskomponente gemäß einer Kennlinie in Abhängigkeit vom Statorstrom ergeben.

Die Flusswerteabhängigkeit stellt den Statorfluss in Abhängigkeit vom Winkel a des Rotors dar, wobei ein Soll-Statorstrom in Richtung eines Stellwinkels, beispielsweise in d-Richtung, vorgegeben ist, auf den der Statorstrom hin geregelt wird.

Erfindungsgemäß wird ein Soll-Statorstrom mit einem weiteren auf die Statorwicklung bezogenen Stellwinkel vorgegeben, insbesondere in q-Richtung,

wobei aus dem zeitlichen Verlauf der Statorspannung und der erfassten Werte des Statorstroms der Statorfluss bestimmt wird,

wobei aus dem bestimmten Statorfluss und einer vom Statorstrom-abhängigen Flusswerteabhängigkeit ein weiterer Winkelwert, insbesondere eine weitere Winkellage, bestimmt wird, insbesondere zur eindeutigen Bestimmung des weiteren Winkelwertes. Von Vorteil ist dabei, dass der Soll-Statorstrom zuerst in einer ersten Richtung und dann in einer anderen Richtung vorgegeben wird. Auf diese Weise ist die Winkelbestimmung zweimal ausführbar und daher eine eindeutige Bestimmung ermöglicht. Denn die Flusswerteabhängigkeit weist Symmetrien auf und der Winkel ist daher bei einer einzigen Bestimmung dieser Art nicht eindeutig bestimmbar.

Die zu einem Statorstrom zugehörige Flusswerteabhängigkeit ist als Ellipse darstellbar, so dass also der Fluss in d-Richtung kleiner ist als in q-Richtung. In einer Zwischenrichtung, also in einer Richtung mit Winkel a, welcher zwischen der d-Richtung und der q-Richtung liegt, nimmt der Fluss entsprechend des Verlaufs der Ellipse einen zwischen dem in q-Richtung und dem in d-Richtung liegenden Wert an.

Die Ellipse ist hier eine geeignete Interpolationsfunktion, welche zur näherungsweise erfolgenden Bestimmung der Zwischenwerte des Flusses geeignet ist. Die Hauptachse ist durch die Summe der Beträge des Wertes des Flusses in d-Richtung und entgegengesetzt zur d-Richtung bestimmt, die Nebenachse der Ellipse ist durch das Doppelte des Wertes des Flusses in q-Richtung bestimmt.

Zur Berücksichtigung höherer Ordnungen, insbesondere also zur Berücksichtigung eines genaueren Verlaufs der Induktivität, muss eine Funktion höherer Ordnungen verwendet werden.

Bei einer vorteilhaften Ausgestaltung wird aus dem zeitlichen Verlauf der Statorspannung und der erfassten Werte des Statorstroms der Statorfluss bestimmt gemäß

$$Y\_a = \int (U\_S - R\_S * I\_S)\, dt,$$

wobei R_S der Statorwiderstand ist. Von Vorteil ist dabei, dass aus den erfassten elektrischen Größen, wie Statorstrom und Statorspannung der Statorfluss bestimmbar ist, welcher zur jeweiligen aktuellen Winkelstellung gehört. Somit ist der Fluss als Modellgröße bestimmbar, auch wenn die Winkellage, also die auf den Stator bezogene Winkelstellung des Rotors, unbekannt ist.

Bei einer vorteilhaften Ausgestaltung ist die Flusswerteabhängigkeit in einem Speicher der Signalelektronik abgespeichert oder Kennlinien in einem Speicher der Signalelektronik abgespeichert werden, aus welchen die Flusswerteabhängigkeit mittels jeweiliger insbesondere Statorstrom-abhängiger Interpolationsfunktionen ermittelt wird. Von Vorteil ist dabei, dass nur wenige Daten abzuspeichern sind, insbesondere genügt das Abspeichern von Kennlinien, so dass die zum jeweiligen Statorstrom gehörende Flusswerteabhängigkeit durch Interpolieren darstellbar ist.

Erfindungsgemäß weist die Flusswerteabhängigkeit einen Flusswert als Funktion des Rotorwinkels und des Statorstroms auf. Von Vorteil ist dabei, dass somit ein Vergleich des mittels Integration bestimmten Wertes des Statorflusses mit der Flusswerteabhängigkeit in einfacher Weise ausführbar ist und somit die Winkellage des Rotors ermittelbar ist.

Erfindungsgemäß ist die Funktion eine Interpolationsfunktion, welche zwischen Stützstellen interpoliert. Von Vorteil ist dabei, dass nur wenig Speicherplatz im Speicher belegt wird und trotzdem die Flusswerteabhängigkeit berücksichtigbar ist.

Erfindungsgemäß wird eine jeweilige Stützstelle mittels einer jeweiligen Kennlinie aus dem Wert des Statorstroms ermittelt. Von Vorteil ist dabei, dass eine einfache Ermittelung der Stützstelle ausführbar ist.

Erfindungsgemäß stellt die jeweilige Kennlinie eine jeweilige Komponente des Flusses in Abhängigkeit des Statorstroms dar, so dass die jeweilige Stützstelle den Wert einer jeweiligen Komponente bei dem aktuell erfassten Statorstrom aufweist. Von Vorteil ist dabei, dass eine einfache Ermittlung des Flusses ermöglicht ist.

Erfindungsgemäß weist eine erste Kennlinie die Komponenten des Flusses in d-Richtung, also in einer ersten Richtung eines rotorbasierten Koordinatensystems, auf. Von Vorteil ist dabei, dass eine einfach bestimmbare Kennlinie verwendet wird.

Erfindungsgemäß weist eine zweite Kennlinie die Komponenten des Flusses entgegengesetzt zur d-Richtung, also entgegengesetzt zur ersten Richtung des rotorbasierten Koordinatensystems, auf. Von Vorteil ist dabei, dass eine einfach bestimmbare Kennlinie verwendet wird.

Erfindungsgemäß weist eine dritte Kennlinie die Komponenten des Flusses in q-Richtung, also in zur ersten Richtung des rotorbasierten Koordinatensystems senkrechten Richtung, auf. Von Vorteil ist dabei, dass eine einfach bestimmbare Kennlinie verwendet wird.

Bei einer vorteilhaften Ausgestaltung ist die Interpolationsfunktion jeweils eine Funktion zweiter Ordnung und/oder eine Ellipse. Von Vorteil ist dabei, dass höhere Ordnungen nicht berücksichtigt werden müssen und trotzdem eine genügend genaue Winkellagenbestimmung ausführbar ist.

Bei einer vorteilhaften Ausgestaltung wird der Winkelwert a bestimmt aus

$$Sin^2(a) = (Y\_a\ ^2 - Y\_d\ ^2)/(Y\_q^2 - Y\_d\ ^2), \text{ wenn } Y\_d < Y\_a <= Y\_q,$$

Und aus

$$Sin^2(a - 90°) = (Y\_a\ ^2 - Y\_q\ ^2)/(Y\_{-}d^2 - Y\_q\ ^2), \text{ wenn } Y\_q < Y\_a <= Y\_{-}d.$$

Von Vorteil ist dabei, dass eine einfache Bestimmung ermöglicht ist.

Wichtige Merkmale der Vorrichtung zur Durchführung des Verfahrens sind, dass ein Stromerfassungsmittel zum Erfassen des Motorstroms mit der Signalelektronik verbunden ist. Von Vorteil ist dabei, dass eine einfache Herstellung ermöglicht ist.

Weitere Vorteile ergeben sich aus den Unteransprüchen.

Die Erfindung wird nun anhand von Abbildungen näher erläutert:

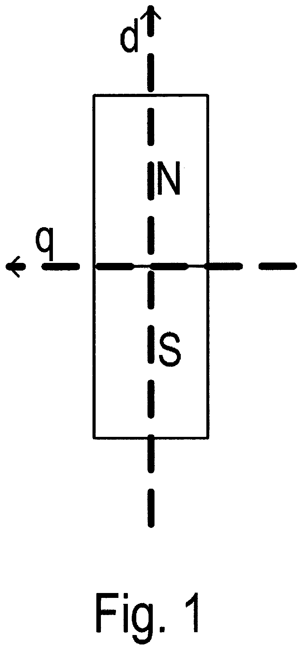

In der Figur 1 sind die q-Richtung und die d-Richtung des Rotors einer Synchronmaschine schematisch dargestellt, wobei der Rotor entsprechend eines Dauermagneten magnetisiert ist.

In der Figur 2 ist die Magnetisierungskennlinie schematisch dargestellt, wobei Y der magnetische Fluss und I der Statorstrom ist.

In der Figur 3 sind die Flusskennlinien in Abhängigkeit vom Statorstrom dargestellt.

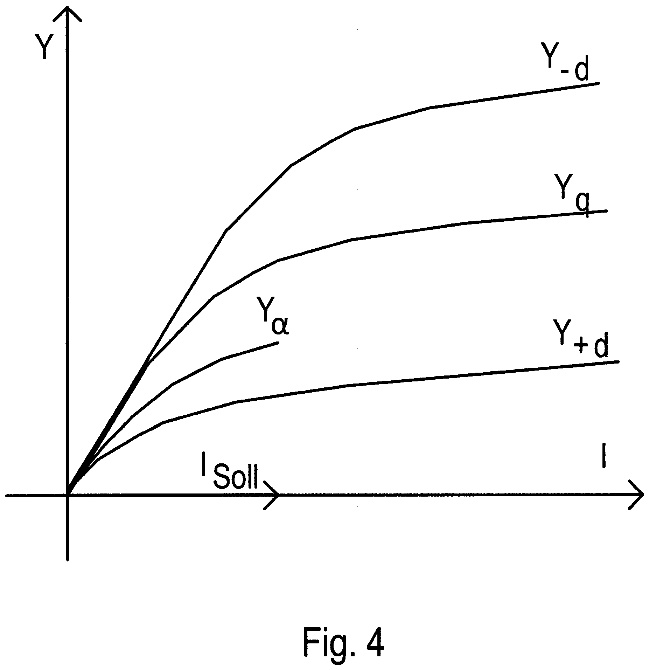

In der Figur 4 ist der Verlauf des aus Messwerten bestimmten, insbesondere also Modellwerts, des Flusses dargestellt.

In der Figur 5 ist der Verlauf des Statorflussbetrags dargestellt.

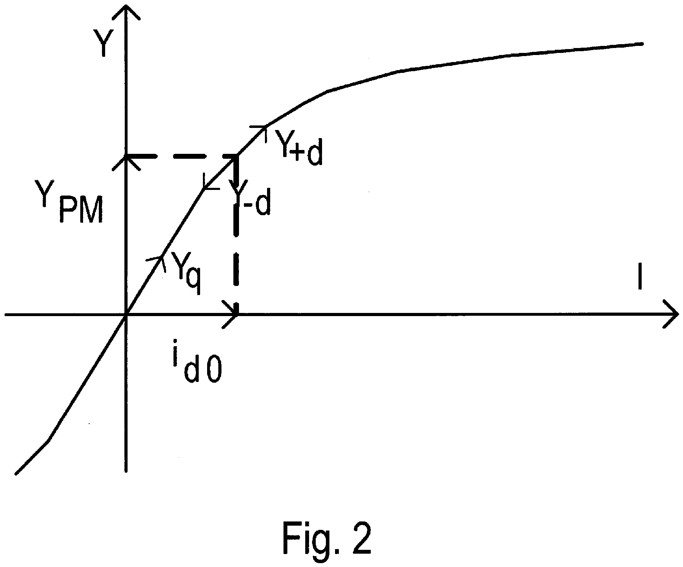

Wie in Figur 2 gezeigt, entspricht der durch den Dauermagneten bewirkte Permanentfluss Y_PM einem Offset-Magnetisierungsstrom I_d0 in d-Richtung.

Hiervon ausgehend bewirkt ein Statorstrom eine Veränderung des Statorflusses, deren Komponente in d-Richtung mit Y_d bezeichnet wird und dessen Komponente entgegengesetzt zur d-Richtung mit Y_-d bezeichnet wird. Wegen des Offsets sind Y_d und Y_-d verschieden. Die Komponente des Statorflusses in q-Richtung wird mit Y_q bezeichnet.

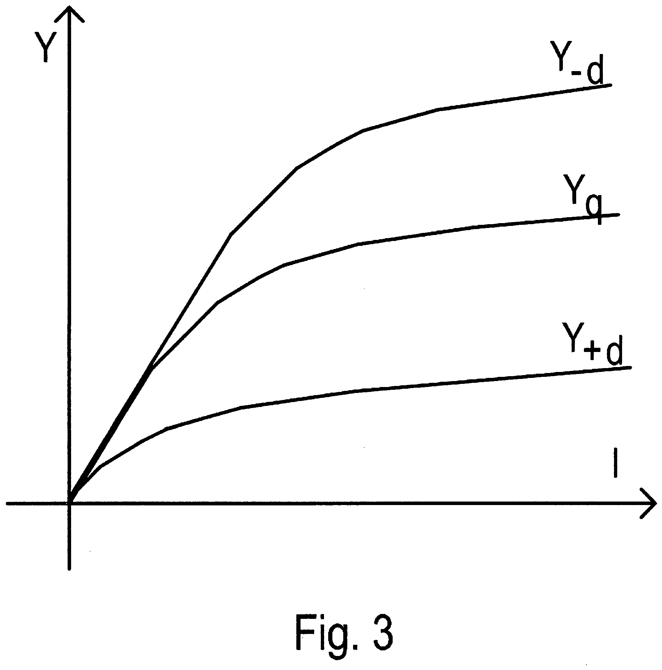

Die Abhängigkeit der genannten Komponenten Y_d, Y_-d und Y_q vom Statorstrom sind in Figur 3 schematisch dargestellt, wobei jeder der Komponenten eine jeweilige Kennlinie zugeordnet ist. Diese Kennlinien werden bei Herstellung oder vor Inbetriebnahme vermessen und im Speicher der eine Rechnereinheit umfassenden Signalelektronik hinterlegt. Somit ist dann der Rechnereinheit ermöglicht, die Werte der Komponenten in Abhängigkeit eines jeweiligen Statorstromwertes zu bestimmen.

Der Synchronmotor weist einen zu einer Statorwicklung drehbar gelagerten Rotor auf. Dabei ist die Statorwicklung als dreiphasig versorgte Drehfeldwicklung ausgeführt. Somit ist der Synchronmotor als Drehstrommotor betreibbar.

Versorgt wird der Motor aus einem Wechselrichter, welcher drei Halbbrücken aufweist, die aus einer unipolaren Spannung, insbesondere Gleichstrom-Zwischenkreis, versorgt sind. Jede der Halbbrücken weist eine Reihenschaltung von zwei steuerbaren Leistungshalbleiterschaltern, insbesondere IGBT oder MOSFET-Schaltern, auf. Der jeweilige Mittelabgriff der Reihenschaltungen stellt eine der Phasenspannungen zur Versorgung der Statorwicklung dar.

Eine Signalelektronik stellt pulsweitenmodulierte Ansteuersignale für die Ansteuerung der Leistungsschalter bereit. Somit ist die Statorwicklung mit Drehspannung vorgebbarer Amplitude und Frequenz versorgbar.

Mittels eines Spannungserfassungsmittels wird die unipolare Spannung erfasst und somit ist aus dem Pulsweitenmodulationsverhältnis der Ansteuersignale der Leistungsschalter der jeweiligen Halbbrücke von der Rechnereinheit die jeweils aktuelle Phasenspannung bestimmbar. Aus den bestimmten Phasenspannungswerten ist somit auch der Statorspannungsraumzeiger bestimmbar, insbesondere dessen Betrag und Richtung.

Außerdem wird auch der Motorstrom bestimmt, also die in den drei Phasen fließenden Ströme. Hierzu ist ein entsprechendes, ein- oder mehrteilig aufgebautes Stromerfassungsmittel vorgesehen. Aus den jeweils aktuell erfassten Stromwerten wird der Statorstromraumzeiger bestimmt, insbesondere also dessen Betrag und Richtung.

Zu Beginn wird ein Sollstrom, also ein Soll-Statorstromraumzeiger, dem in der Rechnereinheit angeordneten Regler vorgegeben. Dieser erzeugt derartigen Ansteuersignale für die Leistungshalbleiterschalter des Wechselrichters, dass die erfasste Istgröße, also der aus den erfassten Stromwerten der Stromerfassungsmittel ermittelte Statorstromraumzeiger, auf den Sollstrom hin geregelt wird, indem die Motorspannung, also der Statorspannungsraumzeiger entsprechend gestellt wird. Die Istgröße weist eine vorgegebene Richtung auf, also einen Stellwinkel.

Während dieses Regelvorgangs, also des Hinregelns der Istgröße auf die Sollgröße, wird der sich entsprechend aufbauende Fluss bestimmt:

Durch Integration der Differenz zwischen der Statorspannung U_S und dem Produkt aus dem Statorwiderstand R_S und dem Statorstrom I_S wird der Statorfluss Y_a bestimmt, also gemäß:

$$Y\_a = \int (U\_S - R\_S * I\_S) \, dt$$

Der Statorwiderstand R_S ist ein bei Konstruktion, Herstellung oder Inbetriebnahme bestimmter Parameter, welcher in einem Speicher der Signaleinheit hinterlegt ist. und somit der Rechnereinheit bekannt.

Der auf den Stellwinkel des Soll-Statorstromraumzeigers bezogene Drehwinkel a des Rotors der Synchronmaschine ist anfangs unbekannt. Um diesen Drehwinkel a zu bestimmen, werden zum aktuell bestimmten Statorstrom erfindungsgemäß zunächst die Werte der Komponenten Y_d, Y_-d und Y_q mittels der Kennlinien ermittelt.

Danach wird eine von den drei Werten aufgespannte Ellipse zur Interpolation verwendet. Hierzu wird aus den Komponenten Y_d und Y_-d eine Hauptachse der Länge Y_d + Y_-d gebildet und die Komponente Y_q in senkrechter Richtung hierzu aufgetragen.

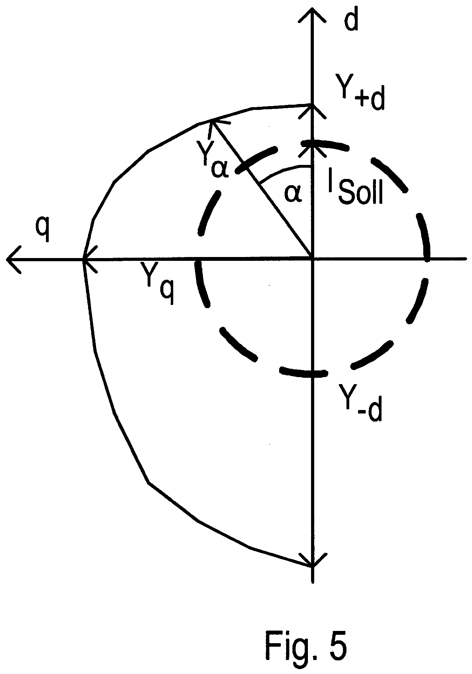

Danach wird derjenige Winkel a bestimmt, bei welchem der bestimmte Statorfluss Y_a die Ellipse berührt, wie in Figur 5 gezeigt ist.

Die Bestimmung erfolgt gemäß

$$\text{Sin}^2(a) = (Y\_a{}^2 - Y\_d{}^2)/(Y\_q^2 - Y\_d{}^2), \text{ wenn } Y\_d < Y\_a <= Y\_q,$$

Und gemäß

$$\text{Sin}^2(a - 90°) = (Y\_a{}^2 - Y\_q{}^2)/(Y\_{-d}^2 - Y\_q{}^2), \text{ wenn } Y\_q < Y\_a <= Y\_{-d}.$$

Da die Ellipse eine spiegelsymmetrisch zur Hauptachse ist, werden die genannten Verfahrensschritt zu einem anderen Zeitpunkt wiederholt, vorzugsweise bei einem um im Wesentlichen 90°versetzten Stellwinkel des Statorstroms I_S. Somit sind Mehrdeutigkeiten vermeidbar.

Somit wird also durch Stellen eines Soll-Statorstromraumzeigers und Bestimmung der dadurch bewirkten Modellgröße Y_a eine Bestimmung der Richtung ermöglicht, wobei dieses Verfahren zum Ausschluss von Mehrdeutigkeiten zweifach oder mehrfach wiederholt wird mit verschiedenen Stellwinkeln des Soll-Statorstromraumzeigers. Bei mehrfacher Ausführung wird eine Verringerung des Messfehlers erreichbar.

Der Synchronmotor sollte für die Ausführung der Erfindung als Grundwellenmotor ausgeführt sein. Bei solchen Motoren genügen nämlich zwei Induktivitätswerte, wie beispielsweise der Wert der Induktivität in q-Richtung und der Wert der Induktivität in d-Richtung, zur vollständigen Beschreibung der Abhängigkeit der Induktivität vom Winkel des Rotors. Abweichungen höherer Ordnung werden hier nicht berücksichtigt.

Die zu einem Statorstrom zugehörige Flusswerteabhängigkeit ist als Ellipse darstellbar, so dass also der Fluss in d-Richtung kleiner ist als in q-Richtung. In einer Zwischenrichtung, also in einer Richtung mit Winkel a, welcher zwischen der d-Richtung und der q-Richtung liegt, nimmt der Fluss entsprechend des Verlaufs der Ellipse einen zwischen dem in q-Richtung und dem in d-Richtung liegenden Wert an.

Die Ellipse ist hier eine geeignete Interpolationsfunktion, welche zur näherungsweise erfolgenden Bestimmung der Zwischenwerte des Flusses geeignet ist. Die Hauptachse ist durch die Summe der Beträge des Wertes des Flusses in d-Richtung und entgegengesetzt zur d-Richtung bestimmt, die Nebenachse der Ellipse ist durch das Doppelte des Wertes des Flusses in q-Richtung bestimmt.

Zur Berücksichtigung höherer Ordnungen, insbesondere also zur Berücksichtigung eines genaueren Verlaufs der Induktivität, muss eine Funktion höherer Ordnungen verwendet werden.

Die Erfindung betrifft also ein Verfahren zur Bestimmung der Winkellage des Rotors eines Synchronmotors, wobei aus statorstromabhängigen Kennlinien von Komponenten des Statorflusses Stützstellen ermittelt werden, durch welche eine Interpolationsfunktion, vorzugsweise Ellipse, gelegt wird. Somit wird der aus erfassten Motorstrom und Motorspannugnswerten als Modellgröße gebildete Statorfluss verglichen mit der Interpolationsfunktion und daraus die Winkellage ermittelt. Eine eindeutige Ermittelung der Winkellage ist durch wiederholtes Ausführen der vorgenannten Schritte erreichbar, wobei dann der Soll-Statorstrom in verschiedene Richtungen vorgegeben wird.

Bezugszeichenliste

q erste Richtung
d zweite Richtung
N Nordpol
S Südpol
Y Magnetischer Fluss
Y_q Komponente des magnetischen Flussvektors in q Richtung
Y_d Komponente des magnetischen Flussvektors in d Richtung
Y_-d Komponente des magnetischen Flussvektors entgegengesetzt zur d Richtung
Y_PM Permanentfluss
Y_a Modellwert für den Flussvektor
I_d0 Magnetisierungsstrom
I_S Statorstrom
I_Soll Sollwert des Statorstroms

**Patentansprüche**

1. Verfahren zur Bestimmung der Winkellage des Rotors eines Synchronmotors,

   wobei aus statorstromabhängigen Kennlinien von Komponenten des Statorflusses Stützstellen ermittelt werden, durch welche eine Interpolationsfunktion, insbesondere Ellipse, gelegt wird, wonach der aus erfasstem Motorstrom und Motorspannungswerten als Modellgröße gebildete Statorfluss Y verglichen mit der Interpolationsfunktion und daraus die Winkellage ermittelt wird,
   wobei aus dem erfassten Motorstrom ein Statorstrom, I_S, bestimmt wird,
   wobei der erfasste Statorstrom, I_S, auf einen vorgegebenen Soll-Statorstrom, I_Soll, hingeregelt wird,
   wobei eine erste der Kennlinien ermittelt wird, welche die Komponenten Y_d des Statorflusses in d-Richtung, also in einer ersten Richtung eines rotorbasierten Koordinatensystems, darstellt,
   wobei eine zweite der Kennlinien ermittelt wird, welche die Komponenten Y_-d des Statorflusses entgegengesetzt zur d-Richtung, also entgegengesetzt zur ersten Richtung des rotorbasierten Koordinatensystems, darstellt,
   wobei eine dritte der Kennlinien ermittelt wird, welche die Komponenten Y_q des Statorflusses in q-Richtung, also in zur ersten Richtung des rotorbasierten Koordinatensystems senkrechten Richtung, darstellt,
   wobei die erste, die zweite und die dritte statorstromabhängigen Kennlinien stellen die Komponenten Y_d, Y_-d und Y_q des Statorflusses Y dar,
   wobei die Stützstellen, durch welche die Interpolationsfunktion gelegt wird, als Werte der Komponenten Y_d, Y_-d und Y_q zum aktuell bestimmten Statorstrom, I_S, mittels der ersten, der zweiten und der dritten Kennlinie ermittelt wird,
   wobei ein Winkelwert, a, der Winkellage bestimmt wird, bei welchem der bestimmte Statorfluss Y der Interpolationsfunktion berührt.

2. Verfahren nach Anspruch 1,

   wobei der Synchronmotor von einem Wechselrichter gespeist wird,
   wobei der Wechselrichter von einer Signalelektronik mit Reglereinheit, insbesondere aufweisend Rechnereinheit und Speicher, angesteuert wird,
   wobei der Statorstrom I_S insbesondere mittels zumindest eines Stromerfassungsmittels erfasst wird,
   wobei der Synchronmotor eine Statorwicklung aufweist, welche von einer vom Wechselrichter derart gestellten Drehspannung, also Statorspannung, gespeist wird, dass der erfasste Statorstrom I_S auf einen vorgegebenen Soll-Statorstrom I_Soll von der Reglereinheit hingeregelt wird,
   wobei der Soll-Statorstrom I_Soll mit einem ersten auf die Statorwicklung bezogenen Stellwinkel vorgegeben wird, insbesondere in d-Richtung,
   wobei die Interpolationsfunktion jeweils eine Funktion zweiter Ordnung und/oder eine Ellipse ist.

3. Verfahren nach Anspruch 1 oder 2,
   **dadurch gekennzeichnet, dass**

   ein **weiteren** Soll-Statorstrom I_Soll mit einem weiteren auf die Statorwicklung bezogenen Stellwinkel vorgegeben wird,

wobei aus dem zeitlichen Verlauf der Statorspannung und der erfassten Werte des Statorstroms I_S der Statorfluss Y bestimmt wird,

wobei aus dem bestimmten Statorfluss Y und einer vom Statorstrom-abhängigen Flusswerteabhängigkeit ein weiterer Winkelwert, insbesondere eine weitere Winkellage, bestimmt wird, insbesondere zur eindeutigen Bestimmung des weiteren Winkelwertes.

4. Verfahren nach mindestens einem der vorangegangenen Ansprüche,
   **dadurch gekennzeichnet, dass**

   aus dem zeitlichen Verlauf der Statorspannung U_S und der erfassten Werte des Statorstroms I_S der Statorfluss Y bestimmt wird gemäß

   $$Y\_a = \int (U\_S - R\_S * I\_S)\, dt$$

   wobei R_S der Statorwiderstand und a der zu bestimmendes Winkelwert ist, wobei Y_a die Komponente des magnetischen Flussvektors in der zum Winkelwert a gehörigen Richtung.

5. Verfahren nach mindestens einem der vorangegangenen Ansprüche,
   **dadurch gekennzeichnet, dass**
   die Flusswerteabhängigkeit in einem Speicher der Signalelektronik abgespeichert ist oder Kennlinien in einem Speicher der Signalelektronik abgespeichert werden, aus welchen die Flusswerteabhängigkeit mittels jeweiliger insbesondere Statorstrom-abhängiger Interpolationsfunktionen ermittelt wird.

6. Verfahren nach mindestens einem der vorangegangenen Ansprüche,
   **dadurch gekennzeichnet, dass**
   der Winkelwert a bestimmt wird aus

   $$Sin^2 (a) = (Y\_a\, ^2 - Y\_d\, ^2)/(Y\_q^2 - Y\_d\, ^2),\ wenn\ Y\_d < Y\_a <= Y\_q,$$

   Und aus

   $$Sin^2 (a - 90°) = (Y\_a\, ^2 - Y\_q\, ^2)/(Y\_{-d}^2 - Y\_q\, ^2),\ wenn\ Y\_q < Y\_a <= Y\_{-d},$$

   wobei

   Y_q die Komponente des magnetischen Flussvektors in q Richtung ist,
   Y_d die Komponente des magnetischen Flussvektors in d Richtung ist,
   Y_-d die Komponente des magnetischen Flussvektors entgegengesetzt zur d Richtung ist und a der zu bestimmendes Winkelwert ist, wobei Y_a die Komponente des magnetischen Flussvektors in der zum Winkelwert a gehörigen Richtung.

7. Vorrichtung zur Durchführung des Verfahrens nach mindestens einem der vorangegangenen Ansprüche,

   wobei die Vorrichtung einen von einem Wechselrichter gespeisten Synchronmotor aufweist, wobei der Wechselrichter von einer Signalelektronik mit Reglereinheit angesteuert wird,
   wobei ein Stromerfassungsmittel zum Erfassen des Motorstroms mit der Signalelektronik verbunden ist.

**Claims**

1. Method for determining the angular position of the rotor of a synchronous motor, wherein interpolation points through which an interpolation function, in particular an ellipse, is placed are ascertained from stator current-dependent characteristic curves of components of the stator flux, after which the stator flux Y generated as a model variable from the detected motor current and motor voltage values is compared with the interpolation function, and the angular position is ascertained therefrom,

wherein a stator current, I_S, is determined from the detected motor current,

wherein the detected stator current, I_S, is controlled towards a predetermined target stator current, I_Soll,

wherein a first of the characteristic curves representing the components Y_d of the stator flux in the d-direction, i.e. in a first direction of a rotor-based coordinate system, is ascertained,

wherein a second of the characteristic curves representing the components Y_-d of the stator flux in the opposite direction to the d-direction, i.e. in the opposite direction to the first direction of the rotor-based coordinate system, is ascertained,

wherein a third of the characteristic curves representing the components Y_q of the stator flux in the q-direction, i.e. in the direction perpendicular to the first direction of the rotor-based coordinate system, is ascertained,

wherein the first, second and third stator current-dependent characteristic curves represent the components Y_d, Y_-d and Y_q of the stator flux Y,

wherein the interpolation points through which the interpolation function is placed are ascertained as values of the components Y_d, Y_-d and Y_q at the currently determined stator current, I_S, by means of the first, second and third characteristic curves,

wherein an angle value, a, of the angular position, at which angular value the determined stator flux Y touches the interpolation function, is determined.

2. Method according to claim 1,

wherein the synchronous motor is fed by an inverter,

wherein the inverter is actuated by signal electronics comprising a controller unit, in particular having a computer unit and a memory,

wherein the stator current I_S is detected in particular by means of at least one current detection means,

wherein the synchronous motor has a stator winding that is fed by a three-phase voltage, i.e. a stator voltage, that is provided by the inverter in such a way that the detected stator current I_S is controlled towards a predetermined target stator current I_Soll by the controller unit, wherein the target stator current I_Soll is predetermined by a first adjustment angle in relation to the stator winding, in particular in the d-direction,

wherein each interpolation function is a second-order function and/or an ellipse.

3. Method according to claim 1 or claim 2,
**characterised in that**

a further target stator current I_Soll is predetermined by a further adjustment angle in relation to the stator winding, wherein the stator flux Y is determined from the time curve of the stator voltage and of the detected values of the stator current I_S,

wherein a further angle value, in particular a further angular position, is determined from the determined stator flux Y and from a flux-value dependency that is dependent on the stator current, in particular in order to unambiguously determine the further angle value.

4. Method according to at least one of the preceding claims,
**characterised in that**

the stator flux Y is determined from the time curve of the stator voltage U_S and of the detected values of the stator current I_S in accordance with

$$Y\_a = \int (U\_S - R\_S * I\_S)\ dt$$

where R_S is the stator resistance and a is the angle value to be determined, where Y_a is the component of the magnetic flux vector in the direction belonging to the angle value a.

5. Method according to at least one of the preceding claims,
**characterised in that**
the flux-value dependency is stored in a memory of the signal electronics, or characteristic curves from which the flux-value dependency is ascertained by means of respective, in particular stator current-dependent, interpolation functions are stored in a memory of the signal electronics.

6. Method according to at least one of the preceding claims,

**characterised in that**
the angle value a is determined from

$$\text{Sin}^2 (a) = (Y\_a \, ^2 - Y\_d \, ^2)/(Y\_q^2 - Y\_d^2), \text{ when } Y\_d < Y\_a <= Y\_q,$$

and from

$$\text{Sin}^2 (a - 90°) = (Y\_a \, ^2 - Y\_q \, ^2)/(Y\_-d^2 - Y\_q \, ^2), \text{ when } Y\_q < Y\_a <= Y\_-d,$$

where

Y_q is the component of the magnetic flux vector in the q-direction,
Y_d is the component of the magnetic flux vector in the d-direction,
Y_-d is the component of the magnetic flux vector in the opposite direction to the d-direction, and a is the angle value to be determined, where Y_a is the component of the magnetic flux vector in the direction belonging to the angle value a.

7. Device for carrying out the method according to at least one of the preceding claims,

wherein the device has a synchronous motor fed by an inverter,
wherein the inverter is actuated by signal electronics comprising a controller unit,
wherein a current detection means for detecting the motor current is connected to the signal electronics.

**Revendications**

1. Procédé de détermination de la position angulaire du rotor d'un moteur synchrone, des nœuds étant déterminés à partir des courbes caractéristiques dépendant du courant statorique de composantes du flux statorique, à travers lesquels une fonction d'interpolation, en particulier une ellipse, est créée,

après quoi le flux statorique Y formé à partir du courant de moteur et des valeurs de tension de moteur détectées en tant que taille de modèle est comparé avec la fonction d'interpolation, en résultat de quoi la position angulaire est déterminée,
un courant statorique, I_S, est déterminé à partir du courant de moteur détecté,
le courant statorique détecté, I_S, est réglé sur un courant statorique de consigne prédéfini, I_Soll,
une première des courbes caractéristiques étant déterminée, qui représente les composantes Y_d du flux statorique dans la direction d, c'est-à-dire dans une première direction d'un système de coordonnées basé sur le rotor,
une deuxième des courbes caractéristiques étant déterminée, qui représente les composantes Y_-d du flux statorique dans la direction opposée à la direction d, c'est-à-dire opposée à la première direction du système de coordonnées basé sur le rotor, une troisième des courbes caractéristiques étant déterminée, qui représente les composantes Y_q du flux statorique dans la direction q, c'est-à-dire dans la direction perpendiculaire à la première direction du système de coordonnées basé sur le rotor, les première, deuxième et troisième courbes caractéristiques dépendantes du courant statorique représentant les composantes Y_d, Y_-d et Y_q du flux statorique Y,
les nœuds par l'intermédiaire desquels la fonction d'interpolation est définie étant déterminés en tant que valeurs des composantes Y_d, Y_-d et Y_q du courant statorique actuellement déterminé, I_S, au moyen des première, deuxième et troisième courbes caractéristiques,
une valeur angulaire, a, de la position angulaire étant déterminée, à laquelle le flux statorique déterminé Y affecte la fonction d'interpolation.

2. Procédé selon la revendication 1,

le moteur synchrone étant alimenté par un onduleur,
l'onduleur étant commandé par une électronique analogique avec unité de régulation, en particulier présentant une unité de calcul et une mémoire,
le courant statorique I_S étant détecté notamment par l'intermédiaire d'au moins un moyen de détection de courant,

le moteur synchrone présentant un enroulement statorique qui est alimenté par une tension triphasée, c'est-à-dire une tension statorique, régulée par l'onduleur de telle manière que le courant statorique, I_S, détecté soit régulé par l'unité de régulation d'après un courant statorique de consigne, I_Soll, prédéfini,

le courant statorique de consigne, I_Soll, étant prédéfini avec un premier angle de réglage lié à l'enroulement statorique, en particulier dans la direction d,

la fonction d'interpolation étant respectivement une fonction du second ordre et/ou une ellipse,

**3.** Procédé selon la revendication 1 ou 2,
**caractérisé en ce**

**qu'**un courant statorique de consigne, I_Soll, supplémentaire est prédéfini avec un angle de réglage lié à l'enroulement statorique supplémentaire,

le flux statorique, Y, étant déterminé à partir de la courbe temporelle de la tension statorique et des valeurs détectées du courant statorique, I_S,

une valeur angulaire supplémentaire étant déterminée à partir du flux statorique, Y, supplémentaire déterminé et d'une dépendance de valeur de flux liée au courant statorique, en particulier une position angulaire supplémentaire, afin de déterminer en particulier sans ambiguïté la valeur angulaire supplémentaire.

**4.** Procédé selon au moins l'une quelconque des revendications précédentes,
**caractérisé en ce que**
le flux statorique, Y, est déterminé à partir de la courbe temporelle de la tension statorique, U_S, et des valeurs détectées du courant statorique, I_S, conformément à

$$Y\_a = \int (U\_S - R\_S * I\_S)\, dt$$

R_S étant la résistance statorique et a étant la valeur angulaire à déterminer, Y_a étant la composante du vecteur de flux magnétique dans la direction correspondant à la valeur angulaire, a.

**5.** Procédé selon au moins l'une quelconque des revendications précédentes,
**caractérisé en ce que**
la dépendance de valeur de flux est mémorisée dans une mémoire de l'électronique analogique ou des courbes caractéristiques, à partir desquelles la dépendance de valeur de flux est déterminée au moyen de fonctions d'interpolation respectives liées en particulier au courant statorique, sont mémorisées dans une mémoire de l'électronique analogique.

**6.** Procédé selon au moins l'une quelconque des revendications précédentes,
**caractérisé en ce que**
la valeur angulaire, a, est déterminée à partir de

$$\mathrm{Sin}^2 (a) = (Y\_a{}^2 - Y\_d{}^2)/(Y\_q{}^2 - Y\_d{}^2),\ \text{lorsque } Y\_d < Y\_a \leq Y\_q,$$

et à partir de

$$\mathrm{Sin}^2 (a - 90°) = (Y\_a{}^2 - Y\_q{}^2)/(Y\_{-}d{}^2 - Y\_q{}^2),\ \text{lorsque } Y\_q < Y\_a \leq Y\_{-}d,$$

Y_q étant la composante du vecteur de flux magnétique dans la direction q,

Y_-d étant la composante du vecteur de flux magnétique dans la direction opposée à la direction d,

Y_-d étant la composante du vecteur de flux magnétique opposée à la direction d et a étant la valeur angulaire à déterminer, Y_a étant la composante du vecteur de flux magnétique dans la direction associée à la valeur angulaire a.

**7.** Dispositif permettant de mettre en œuvre le procédé selon au moins l'une quelconque des revendications précédentes,

le dispositif présentant un moteur synchrone alimenté par un onduleur, l'onduleur étant commandé par une électronique analogique avec unité de régulation,
un moyen de détection de courant pour détecter le courant du moteur étant relié à l'électronique analogique.

Fig. 1

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6137257 A
- US 2004145334 A1
- US 2008129243 A1
- US 2003015987 A1

### In der Beschreibung aufgeführte Nicht-Patentliteratur

- Sensorless control of an IPM synchronous motor for cityscooter applications. **TURSINI M et al.** CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003. IEEE, 12 October 2003, vol. 3, 1472-1479

- Fundamental saliency based encoderless control for reluctance synchronous machines. **LANDSMANN P et al.** ELECTRICAL MACHINES (ICEM), 2010 XIX INTERNATIONAL CONFERENCE ON. IEEE, 06 September 2010, 1-7